# EUROPEAN PATENT APPLICATION

(11) **EP 3 560 770 A1**
(43) Date of publication of application: **30.10.2019**
(21) Application number: 19171206.6
(22) Date of filing: 25.04.2019
(51) Int. Cl.: B60R 21/015

(54) **OCCUPANT INFORMATION DETERMINATION APPARATUS**

(30) Priority: 26.04.2018 JP 2018085531
(71) Applicant: AISIN SEIKI KABUSHIKI KAISHA, Kariya-shi Aichi-ken, 448-8650 (JP)
(72) Inventor: TANAKA, Godai, KARIYA-SHI, AICHI-KEN, 448-8650 (JP)
(74) Representative: Cabinet Beau de Loménie

(57) **Abstract**

An occupant information determination apparatus (100) includes: a head detection unit (14) configured to detect a head of an occupant from a captured image of a vehicle room that is captured by an imaging device (32); a sensor value detection unit (11) configured to detect a detection value of a sensor provided on a seat (2) in the vehicle room; and an occupant physique determination unit (15) configured to determine a physique of the occupant from a position of the head of the occupant and a size of the head of the occupant detected by the head detection unit and the detection value detected by the sensor value detection unit.

## Description

### TECHNICAL FIELD

Embodiments of this disclosure relate to an occupant information determination apparatus.

### BACKGROUND DISCUSSION

In the related art, a technology has been known, in which information such as the physique of an occupant is determined from a captured image of a vehicle room or information of a load sensor provided on a seat and is used for the deployment of an airbag, and the like. See, for example, JP 2016-222145A (Reference 1) and JP 5765069B (Reference 2).

The related art described above has room for a further improvement in terms of improving the accuracy of determination.

### SUMMARY

An occupant information determination apparatus according to an aspect of this disclosure includes, for example, a head detection unit configured to detect a head of an occupant from a captured image of a vehicle room that is captured by an imaging device, a sensor value detection unit configured to detect a detection value of a sensor provided on a seat in the vehicle room, and an occupant physique determination unit configured to determine a physique of the occupant from a position of the head of the occupant and a size of the head of the occupant detected by the head detection unit and the detection value detected by the sensor value detection unit.

Thus, as an example, it is possible to improve the accuracy of determination of the physique of the occupant.

The sensor may be a load sensor, and the sensor value detection unit may detect a load value applied to the seat from the detection value of the load sensor.

Thus, as an example, it is possible to perform the determination of the physique of the occupant based on the position of the head of the occupant, the size of the head, and the load value applied to the seat.

In the occupant information determination apparatus, for example, the occupant physique determination unit may determine the physique of the occupant by statistically analyzing the position of the head of the occupant, the size of the head of the occupant, and the detection value.

Thus, as an example, with statistical analysis, it is possible to dramatically improve the accuracy of determination of the physique of the occupant.

For example, the occupant information determination apparatus may include a storage unit configured to store a map representing a relationship between the position of the head of the occupant, the size of the head of the occupant, and the detection value and the physique of the occupant, and the occupant physique determination unit may determine the physique of the occupant based on the map.

Thus, as an example, by determining the physique of the occupant based on the map, it is possible to dramatically improve the accuracy of determination of the physique of the occupant.

In the occupant information determination apparatus, for example, the occupant physique determination unit may determine the physique of the occupant from the detection value when imaging of the vehicle room by the imaging device is not possible.

Thus, as an example, it is possible to continuously determine the physique of the occupant even when imaging of the vehicle room is not possible.

For example, the occupant information determination apparatus may include an occupant presence/absence determination unit configured to determine whether or not the occupant is in the vehicle room from the detection value detected by the sensor value detection unit, and the head detection unit and the occupant physique determination unit may be operated when the occupant presence/absence determination unit determines that the occupant is in the vehicle room.

Thus, as an example, it is possible to reduce processing load of the occupant information determination apparatus.

For example, the occupant information determination apparatus may include an occupant posture determination unit configured to determine a posture of the occupant from the position of the head of the occupant and the size of the head of the occupant detected by the head detection unit and the detection value detected by the sensor value detection unit.

Thus, as an example, it is impossible to improve the accuracy of determination of the posture of the occupant.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a plan view of a vehicle room of a vehicle equipped with an occupant information determination apparatus according to the embodiment as viewed from above;
Fig. 2 is a block diagram illustrating a configuration of an ECU and a peripheral configuration according to the embodiment;
Fig. 3 is a flowchart illustrating an example of an occupant physique determination processing by the ECU according to the embodiment;
Fig. 4 is a flowchart illustrating an example of the procedure of an occupant presence/absence determination processing by the ECU according to the embodiment; and
Fig. 5 is a flowchart illustrating an example of an occupant posture determination processing by the ECU according to the embodiment.

### DETAILED DESCRIPTION

Hereinafter, an exemplary embodiment disclosed here will be disclosed. A configuration of the embodiment described below, and the actions, results, and effects caused by the configuration are given by way of example. This disclosure may be realized by configurations other than the configuration disclosed in the following embodiment, and may also obtain at least one of various effects based on the basic configuration or derivative effects.

### [Configuration of Vehicle]

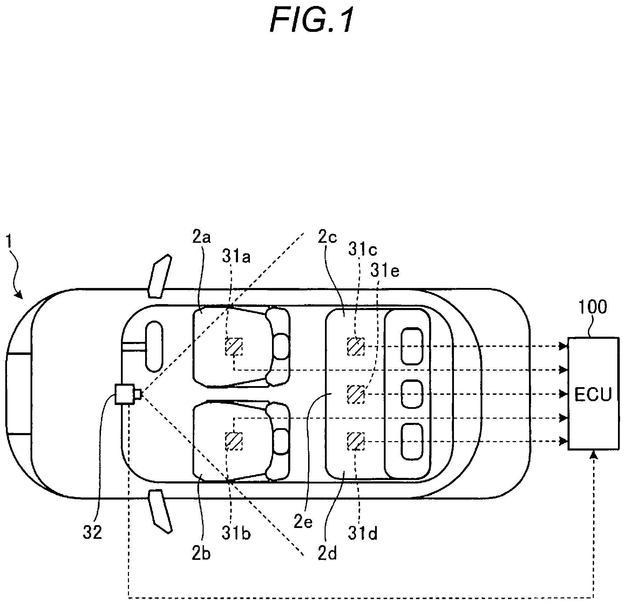

Fig. 1 is a plan view of a vehicle room of a vehicle 1 equipped with an occupant physique determination apparatus according to an embodiment as viewed from above. As illustrated in Fig. 1, a plurality of seats 2a to 2e are provided in the vehicle room of the vehicle 1. Specifically, a driver's seat 2a and a passenger seat 2b are provided on the front side in the vehicle room, and a plurality of rear seats 2c to 2e are provided on the rear side.

The plurality of rear seats 2c to 2e are so-called bench seat type rear seats having seat surfaces continuous with each other. Among the plurality of rear seats 2c to 2e, the rear seat 2c is provided behind the driver's seat 2a, the rear seat 2d is provided behind the passenger seat 2b, and the rear seat 2e is provided between the rear seat 2c and the rear seat 2d.

Each of the seats 2a to 2e is provided with one of load sensor 31a to 31e. Specifically, the load sensor 31a is provided on the driver's seat 2a, the load sensor 31b is provided on the passenger seat, and the load sensors 31c to 31e are provided on the respective rear seats 2c to 2e. However, the load sensors 31a to 31e may be provided in a plural number for each of the seats 2a to 2e. When providing a plurality of load sensors on each of the seats 2a to 2e, the load sensors 31a to 31e may be provided, for example, at two positions on the front side and the rear side of the seat surface. In addition, the load sensors 31a to 31e may be provided, for example, at two positions on the left side and the right side of the seat surface. In addition, the load sensors 31a to 31e may be provided, for example, at four positions on the four corners of the seat surface.

The load sensors 31a to 31e are, for example, metal strain gauges using capacitance or semiconductor strain gauges using a piezoelectric element. Detection values of the load sensors 31a to 31e are output to an electronic control unit (ECU) 100 to be described later.

When the plurality of load sensors 31a to 31e are provided on the respective seats 2a to 2e, a seating sensor may be used instead of or in addition to the load sensor 31. As the seating sensor, for example, a non-contact type capacitance sensor that detects a living body from a change in capacitance may be used. A far-infrared sensor, a motion sensor, or a Doppler sensor, for example, may also be used.

In addition, hereinafter, the respective seats 2a to 2e will also be referred to as the seat 2 unless particularly distinguished. In addition, the respective load sensors 31a to 31e are also referred to as the load sensor 31 unless particularly distinguished.

An imaging device 32 is provided on the front side in the vehicle room. The imaging device 32 incorporates an imaging element such as a charge coupled device (CCD) or a CMOS image sensor (CIS) therein. An image captured by the imaging device 32 is output to the ECU 100 to be described later.

The imaging device 32 captures an image of the vehicle room. Specifically, for example, the orientation, the viewing angle, and the installation position of the imaging device 32 are determined such that the imaging device 32 is capable of imaging all of the seats 2 in the vehicle room, i.e., imaging at least heads of all occupants seated on all of the seats 2 in the vehicle room. For example, the imaging device 32 may be provided around a rearview mirror. However, the imaging device 32 may be provided at any position as long as it is capable of capturing an image of the heads of the occupants in the vehicle room, and may also be provided in a plural number.

Any type of camera may be employed as the imaging device 32. For example, a monocular camera, a stereo camera, a visible light camera, an infrared camera, or a TOF distance image camera may be employed as the imaging device 32. Among these, the infrared camera is effective in that it is difficult to be excessively exposed out even in a situation where the outside of the vehicle is bright and in that it is capable of catching the occupant to some extent even in a situation where the vehicle room is dark.

The ECU 100 is configured to be able to realize various control functions of the vehicle 1. For example, the ECU 100 may have a function as an occupant information determination apparatus to be described later, and may also execute control of an airbag device, control of a brake system, or control of a steering system.

### [Configuration of ECU]

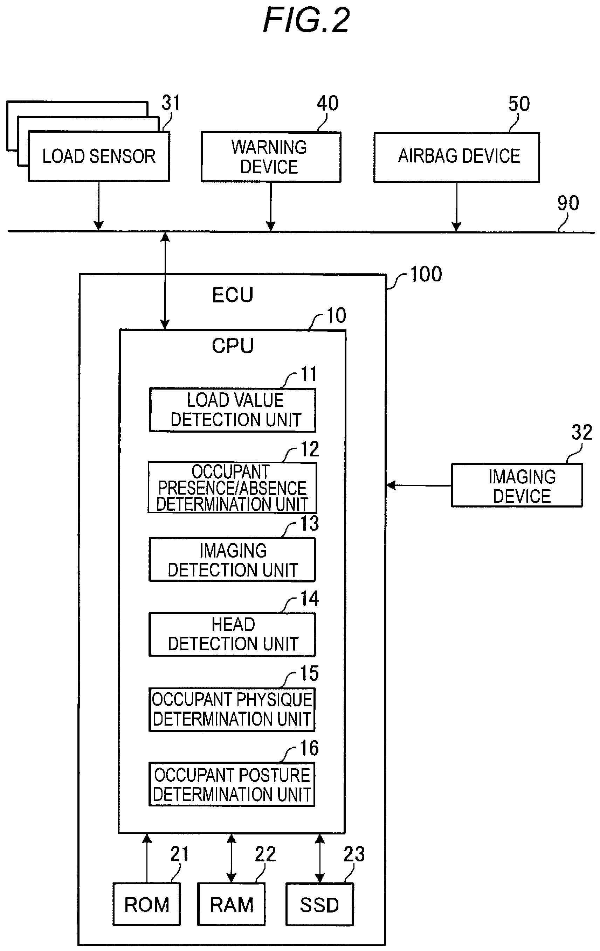

Next, a configuration of the ECU 100 having a function as the occupant information determination apparatus and a peripheral configuration of the ECU 100 will be described with reference to Fig. 2. Fig. 2 is a block diagram illustrating a configuration of the ECU 100 and a peripheral configuration thereof according to the embodiment.

The ECU 100 as the occupant information determination apparatus according to the embodiment includes a head detection unit 14 that detects the head of an occupant from a captured image of the vehicle room that is captured by the imaging device 32, a load value detection unit 11 as a sensor value detection unit that detects a detection value of the load sensor 31 as a sensor provided on the seat 2 in the vehicle room, and an occupant physique determination unit 15 that determines a physique of the occupant from the position of the head of the occupant and the size of the head of the occupant detected by the head detection unit 14 and the detection value detected by the load sensor 31. Hereinafter, the ECU 100 according to the embodiment will be described in detail.

As illustrated in Fig. 2, the ECU 100 is electrically connected to the load sensor 31, a warning device 40, and an airbag device 50 via an in-vehicle network 90. In addition, the ECU 100 is electrically connected to the imaging device 32 via an output line. The in-vehicle network 90 is configured as, for example, a controller area network (CAN). The output line is, for example, a national television system committee (NTSC) cable.

The ECU 100 as the occupant information determination apparatus determines the body size and posture of the occupant as occupant information. The ECU 100 includes, for example, a central processing unit (CPU) 10, a read only memory (ROM) 21, a random access memory (RAM) 22, and a solid state drive (SSD) 23. The CPU 10, the ROM 21, and the RAM 22 may be integrated in the same package.

The CPU 10 realizes a function as the occupant information determination apparatus by executing programs installed and stored in a non-volatile storage device such as the ROM 21. As functional units realized by the programs, the CPU 10 includes, for example, the load value detection unit 11, an occupant presence/absence determination unit 12, an imaging detection unit 13, the head detection unit 14, the occupant physique determination unit 15, and an occupant posture determination unit 16. The RAM 22 temporarily stores various data used in the operation of the CPU 10. In addition, instead of the CPU 10, another logical operation processor such as a digital signal processor (DSP) or a logic circuit may be used.

The SSD 23 as a storage unit is a rewritable non-volatile storage device, and may store data even when a power of the ECU 100 is turned off. For example, data such as the load value detected by the load sensor 31 and the captured image that is captured by the imaging device 32 are accumulated in the SSD 23. In addition, in the SSD 23, various maps to be described later are stored so as to be used in the determination of the occupant information and, for example, the determination results of the occupant information are accumulated. In addition, a hard disk drive (HDD) may be provided instead of the SSD 23, and the SSD 23 or the HDD may be provided separately from the ECU 100.

The load value detection unit 11 as the sensor value detection unit detects the load value obtained from the load sensor 31 and outputs the load value to the occupant presence/absence determination unit 12, the occupant physique determination unit 15, and the occupant posture determination unit 16.

The occupant presence/absence determination unit 12 determines whether or not there is an occupant on each of the seats 2a to 2e based on the load value acquired from the load value detection unit 11. When no occupant is present in the vehicle room, the imaging detection unit 13, the head detection unit 14, the occupant physique determination unit 15, and the occupant posture determination unit 16 described below do not start operations.

The imaging detection unit 13 detects an image obtained from the imaging device 32 and determines whether or not the imaging device 32 functions correctly. This is because the imaging device 32 is a delicate device compared to, for example, the load sensor 31 and has a risk of operating incorrectly or breaking down under a high temperature environment. In addition, this is because imaging may be interrupted temporarily due to the influence of disturbance light and the like. When the imaging device 32 functions correctly, the imaging detection unit 13 outputs the image obtained from the imaging device 32 to the head detection unit 14, the occupant physique determination unit 15, and the occupant posture determination unit 16.

The head detection unit 14 detects the head of the occupant based on the image acquired from the imaging detection unit 13 and determines the position and size of the head in the image. Information on the position of the head includes, for example, the position coordinates and inclination of the head in the image. The head detection unit 14 outputs the determined position and size of the head to the occupant physique determination unit 15 and the occupant posture determination unit 16.

The occupant physique determination unit 15 determines the physique of the occupant from the load value acquired from the load value detection unit 11 and the position and size of the head of the occupant acquired from the head detection unit 14. Then, the occupant physique determination unit 15 determines whether the occupant is an adult male, an adult female, or a child from the determined physique. For discrimination between an adult and a child, for example, 10 years old and younger may be discriminated as a child, and 11 years and older may be discriminated as an adult.

As a method of determining the physique, the occupant physique determination unit 15 statistically analyzes the load value and the position and size of the head of the occupant. For statistical analysis, for example, a map that indicates a relationship between the load value and the position and size of the head of the occupant and the physique of the occupant may be used. In such a map, a prescribed load value and a prescribed position and a prescribed size of the head of the occupant are linked to a prescribed physique of the occupant. The prescribed physique of the occupant is determined by applying the prescribed load value and the prescribed position and the prescribed size of the head of the occupant to the map. For example, when the head is at a low position and is small and the load value is low, there is a high probability of being determined that the occupant is small. For example, when the head is at the low position and is small but the load value is high, it may be determined to be a large-sized occupant (occupant losing his/her posture). Such a map is stored, for example, in the SSD 23.

The SSD 23 also stores, for example, two thresholds 1 and 2 (threshold 1 < threshold 2) for the physique of the occupant. The occupant physique determination unit 15 determines that the occupant is a child when the determined prescribed physique is less than the threshold 1. The occupant physique determination unit 15 determines that the occupant is an adult female when the determined prescribed physique is greater than or equal to the threshold 1 and less than the threshold 2. The occupant physique determination unit 15 determines that the occupant is an adult male when the determined prescribed physique is equal to or greater than the threshold 2.

The occupant posture determination unit 16 determines the posture of the occupant from the load value acquired from the load value detection unit 11 and the position and size of the head of the occupant acquired from the head detection unit 14. The posture of the occupant that may be determined may be defined variously. Specifically, examples of the posture include a normal position, rightward tilting, leftward tilting, or forward tilting. The normal position indicates a state where the occupant sits on the center of the seat. The rightward tilting or the leftward tilting indicates a posture in which the occupant leans on a door or a console box. The forward tilting indicates that the occupant takes a forward leaning posture.

As a method of determining the posture, the occupant posture determination unit 16 statistically analyzes the load value and the position and size of the head of the occupant. For statistical analysis, for example, a map that indicates a relationship between a change in the load value and a change in the position and size of the head of the occupant and the posture of the occupant may be used. At this time, each change may be a change from a case where the occupant is at the normal position. The load value and the position and size of the head of the occupant at the normal position may be estimated based on these variously variable values of the occupant obtained so far. In such a map, a prescribed change in the load value and a prescribed change in the position and size of the head of the occupant are linked to a prescribed posture of the occupant. The prescribed posture of the occupant is determined by applying the prescribed change in the load value and the prescribed change in the position and size of the head of the occupant to the map. For example, when all of the position and size of the head and the load value are not substantially changed from the values at the normal position, there is a high probability of being determined that the occupant is seated at the normal position. For example, when the position of the head is lowered, the size of the head is increased, and a change in the load value is large, it may be determined that the occupant is seated in a forward leaning posture. Such a map is stored, for example, in the SSD 23.

The airbag device 50 is provided to correspond to each of the plurality of seats 2. The airbag device 50 is provided at least in front of each seat 2. The airbag device 50 may be further provided on the lateral side (door side) of each seat 2. The airbag device 50 protects the occupant seated on the seat 2 from impact by deploying an airbag at the time of a collision of the vehicle 1. At this time, the ECU 100 controls the airbag device 50 based on the occupant information such as the physique and posture of the occupant obtained from the occupant physique determination unit 15 and the occupant posture determination unit 16. For example, when deploying the airbag at a normal speed to a child or an occupant who takes a forward leaning posture, it may be rather dangerous. In this case, adjustment is performed such as reducing the deployment speed of the airbag.

The warning device 40 includes, for example, a warning light or a speaker. The ECU 100 warns the occupant to take a proper posture via the warning device 40 based on the occupant information obtained from the occupant posture determination unit 16, for example, when the occupant takes a forward leaning posture that is dangerous enough or when the occupant leans on the door.

### [Operation of ECU]

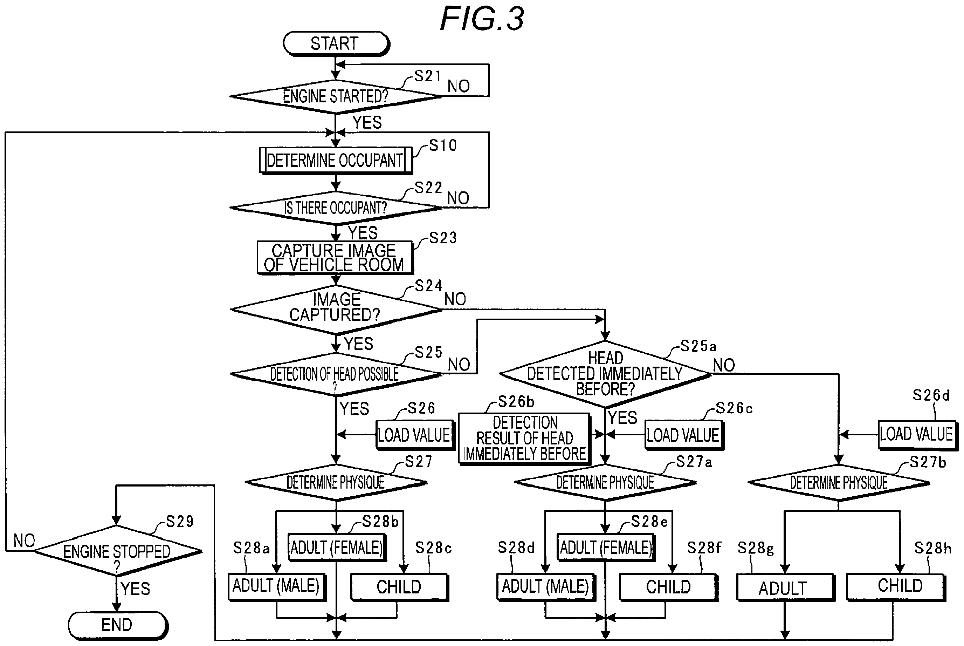

Next, a specific operation of the ECU 100 will be described with reference to Figs. 3 to 5.

Fig. 3 is a flowchart illustrating an example of an occupant physique determination processing by the ECU 100 according to the embodiment. In the following description, the processing related to the seat 2c will be described, but the processing illustrated in Fig. 3 is performed for each of the seats 2a to 2e.

As illustrated in Fig. 3, the ECU 100 stands by until an engine of the vehicle 1 is started (step S21: No). When the engine of the vehicle 1 is started (step S21: Yes), the load value detection unit 11 and the occupant presence/absence determination unit 12 determine the presence or absence of an occupant on the seat 2c (step S10). Details of the determination of the presence/absence of the occupant will be described later. The ECU 100 stands by until seating of the occupant is confirmed (step S22: No), and when the seating is confirmed (step S22: Yes), starts an operation of the imaging device 32 (step S23). The imaging detection unit 13 acquires a captured image from the imaging device 32 and determines whether or not the imaging device 32 correctly captures an image (step S24).

When the image is correctly captured (step S24: Yes), the head detection unit 14 determines whether or not the head of the occupant may be detected based on the image acquired from the imaging detection unit 13 (step S25). When the head of the occupant may be detected (step S25: Yes), after the result of the load value detected by the load value detection unit 11 is added (step S26), the occupant physique determination unit 15 determines the physique of the occupant from the position and size of the head of the occupant and the load value (step S27). The load value added in step S26 is the result of the latest load value at that time. The occupant physique determination unit 15 determines whether the occupant is an adult male (step S28a), an adult female (step S28b), or a child (step S28c) based on the determined physique.

When the image is not correctly captured by the imaging device 32 (step S24: No), or when the head of the occupant may not be detected (step S25: No), the head detection unit 14 determines whether or not the head has been detected immediately before (step S25a). The term "immediately before" means within a prescribed time before the time when the head may not be detected. When the head has been detected immediately before (step S25a: Yes), the occupant physique determination unit 15 determines the physique of the occupant from the position and size of the head detected immediately before and the latest load value at the current time (step S27a). At this time, the occupant physique determination unit 15 performs this determination under the assumption that there is no change in the seating state of the occupant from the time when the head of the occupant is detected to the current time. The occupant physique determination unit 15 determines whether the occupant is an adult male (step S28d), an adult female (step S28e), or a child (step S28f) based on the determined physique.

When the image is not correctly captured by the imaging device 32 (step S24: No), when the head of the occupant may not be detected (step S25: No), or when the head may not be detected immediately before (step S25a: No), the occupant physique determination unit 15 determines the physique of the occupant from only the detected load value at that time (step S27b). At this time, since the head detection result may not be used, deterioration in the accuracy of determination is an undeniable fact. Therefore, the occupant physique determination unit 15 determines whether the occupant is an adult (step S28g) or a child (step S28h) from the determined physique.

While the engine is operating (step S29: No), the ECU 100 repeats the operation of steps S22 to S28h. When the engine is stopped (step S29: Yes), the ECU 100 terminates the occupant physique determination processing.

In this way, the occupant physique determination processing by the ECU 100 terminates.

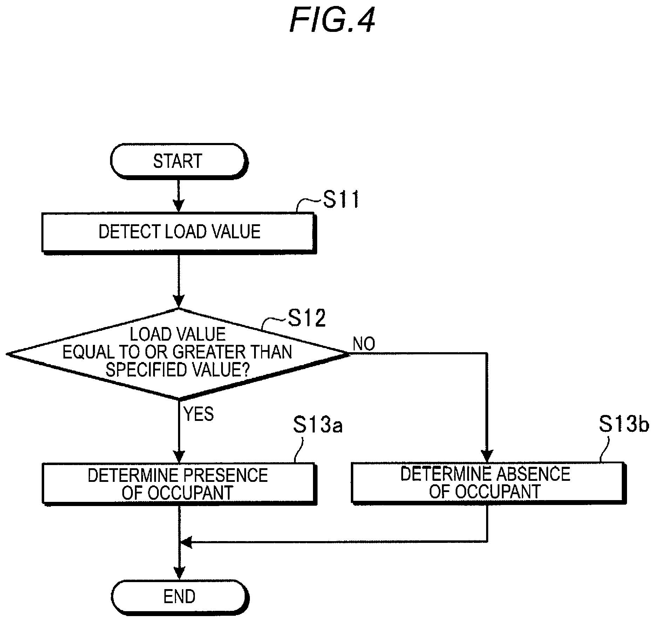

Fig. 4 is a flowchart illustrating an example of the procedure of an occupant presence/absence determination processing by the ECU 100 according to the embodiment. In the following description, the processing related to the seat 2c will be described, but the processing illustrated in Fig. 4 is executed for each of the seats 2a to 2e.

As illustrated in Fig. 4, the load value detection unit 11 which is a functional unit of the CPU 10 constituting the ECU 100 detects the load value for the seat 2c and outputs the load value to the occupant presence/absence determination unit 12 (step S11). The occupant presence/absence determination unit 12 determines whether or not the load value acquired from the load value detection unit 11 is equal to or greater than a specified value (step S12). When the load value is equal to or greater than the specified value (step S12: Yes), the occupant presence/absence determination unit 12 determines that the occupant is on the seat 2c (step S13a). When the load value is less than the specified value (step S12: No), the occupant presence/absence determination unit 12 determines that no occupant is on the seat 2c (step S13b).

In this way, the occupant presence/absence determination processing by the ECU 100 terminates.

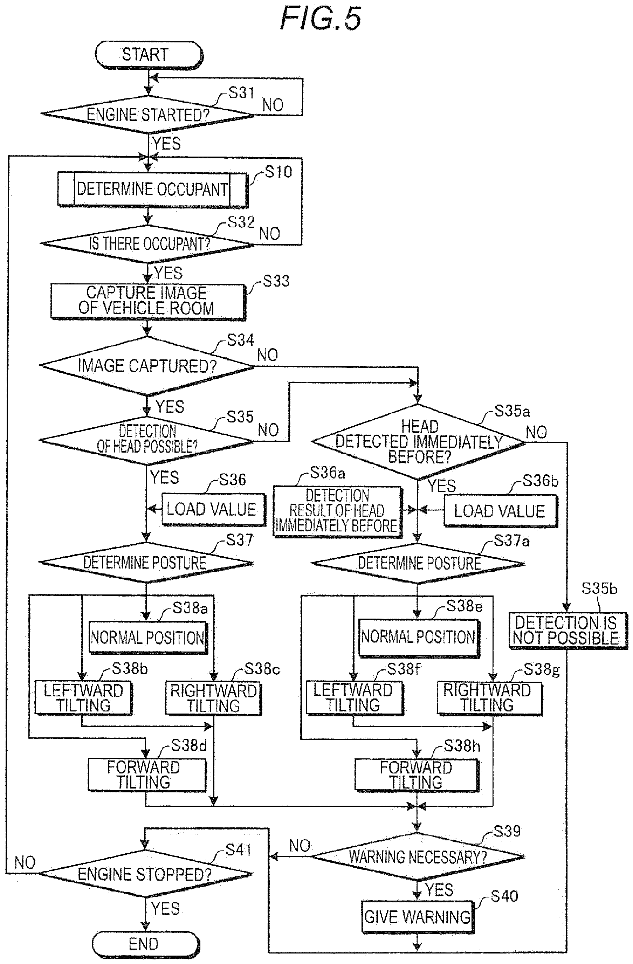

Fig. 5 is a flowchart illustrating an example of an occupant posture determination processing by the ECU 100 according to the embodiment. In the following description, the processing for the seat 2c will be described, but the processing illustrated in Fig. 5 is executed for each of the seats 2a to 2e.

As illustrated in Fig. 5, the ECU 100 stands by until the engine of the vehicle 1 is started (step S31: No). When the engine of the vehicle 1 is started (step S31: Yes), the load value detection unit 11 and the occupant presence/absence determination unit 12 determine the presence or absence of the occupant on the seat 2c according to the flow of Fig. 4 (step S10). The ECU 100 stands by until seating of an occupant is confirmed (step S32: No), and when the seating is confirmed (step S32: Yes), starts an operation of the imaging device 32 (step S33). The imaging detection unit 13 acquires a captured image from the imaging device 32 and determines whether or not the image is correctly captured by the imaging device 32 (step S34).

When the image is correctly captured (step S34: Yes), the head detection unit 14 determines whether or not the head of the occupant may be detected based on the image acquired from the imaging detection unit 13 (step S35). When the head of the occupant may be detected (step S35: Yes), after the result of the load value detected by the load value detection unit 11 is added (step S36), the occupant posture determination unit 16 determines the posture of the occupant from the position and size of the head of the occupant and the load value (step S37). The load value added in step S36 is the result of the latest load value at that time. The occupant posture determination unit 16 determines whether the occupant is seated at the normal position (step S38a), is in leftward tilting (step S38b), is in rightward tilting (step S38c), or is in forward tilting (step S38d) from the determination result.

When the image is not correctly captured by the imaging device 32 (step S34: No), or when the head of the occupant may not be detected (step S35: No), the head detection unit 14 detects whether or not the head has been detected immediately before (step S35a). The term "immediately before" means within a prescribed time before the time when the head may not be detected. When the head has been detected immediately before (step S35a: Yes), the occupant posture determination unit 16 determines the posture of the occupant from the position and size of the head detected immediately before and the latest load value at the current time (step S37a). At this time, the occupant physique determination unit 15 performs this determination under the assumption that there is no change in the seating state of the occupant from the time when the head of the occupant is detected to the current time. The occupant posture determination unit 16 determines whether the occupant is seated at the normal position (step S38e), is in leftward tilting (step S38f), is in rightward tilting (step S38g), or is in forward tilting (step S38h) from the determination result.

The ECU 100 determines whether or not a warning by the warning device 40 is necessary from the determination result (steps S38a to S38h) obtained by the occupant posture determination unit 16 (step S39). When the warning is necessary (step S39: Yes), the ECU 100 causes the warning device 40 to give a warning. When the warning is unnecessary (step S39: No), the processing proceeds to step S41.

When the image is not correctly captured by the imaging device 32 (step S34: No), when the head of the occupant may not be detected (step S35: No), or when the head may not be detected immediately before (step S35a: No), the occupant posture determination unit 16 determines that the determination of the posture of the occupant is not possible (step S35b), and the processing proceeds to step S41.

While the engine is operating (step S41: No), the ECU 100 repeats the operation of steps S32 to S40. When the engine is stopped (step S41: Yes), the ECU 100 terminates the occupant posture determination processing.

In this way, the occupant posture determination processing by the ECU 100 terminates.

In addition, the physique and posture of the occupant as the occupant information may be individually determined by the occupant physique determination unit 15 and the occupant posture determination unit 16. This is because the accuracy of determination is increased by using different maps and procedures as described above when determining the physique of the occupant and when determining the posture of the occupant. In addition, this is because the determination result of the physique may be useful even if there is no determination result of the posture, and therefore, as described above, when the determination of the physique is possible even when the determination of the posture is not possible, the determination of the physique may be used.

By the way, in an occupant restraint control device of Reference 1, an image of a vehicle room is obtained by a CCD camera, and for example, the physique of an occupant seated on a seat is determined from the obtained image. The determination of the physique of the occupant is performed based on the area that the occupant occupies in the image and the position of the seat. However, when the physique of the occupant is determined only by image recognition, there is a risk that an object other than the occupant, such as a doll placed on the seat, is misrecognized as the occupant and determination of the physique is performed on the object other than the occupant. In addition, there is a risk that the area that the occupant occupies in the image may be reduced according to the posture of the occupant or the orientation of the body, and thus, accurate determination may not be performed. In addition, when the CCD camera is not correctly operated and an image may not be acquired, the determination itself is impossible.

In addition, in a seat load determination apparatus of Reference 2, it is determined whether an occupant is an adult or a child or whether a seat is vacant based on a seat load detection value of a load sensor provided on the seat. However, when the occupant takes an extreme posture such as leaning on the door, there is a risk that the determination of the physique of the occupant is incorrectly performed.

In the ECU 100 as the occupant information determination apparatus according to the embodiment, the physique of the occupant is determined from the load value by the load sensor 31 and the captured image by the imaging device 32. Thus, for example, even if the posture of the occupant changes variously, the physique of the occupant may be correctly determined when the load value obtained from the load sensor is added. In addition, for example, even when the correct load value may not be acquired due to the posture of the occupant, the load value may be corrected from the captured image, and the physique of the occupant may be correctly determined.

In addition, in the ECU 100 according to the embodiment, the posture of the occupant is determined based on a change obtained by comparing the position coordinates, inclination and size of the head of the occupant and the load value with these values at the normal position. Thus, by adding the load value to the image of the imaging device 32, it is possible to determine not only the inclination of the body of the occupant but also the seating position on the seat such as forward tilting, leftward tilting, or rightward tilting.

As described above, by using both the load value by the load sensor 31 and the captured image by the imaging device 32, the accuracy of determination of the occupant information such as the physique and posture of the occupant is dramatically improved. At this time, it has been found empirically that higher accuracy than the determination result based on either the load value or the captured image is obtained and that higher accuracy than that obtained by simply adding the accuracy obtained by the load value to the accuracy obtained by the captured image is obtained.

In addition, in the ECU 100 according to the embodiment, when imaging by the imaging device 32 is difficult or even when the head of the occupant may not be detected, it is possible to obtain the load value of the occupant from the load sensor 31. Therefore, it is possible to continuously determine at least the physique of the occupant. When the head of the occupant has been detected immediately before, by using the previous detection result of the head of the occupant under the assumption that there is no change in the seating state of the occupant, it is possible to continuously perform the determination of the posture of the occupant.

In addition, in the ECU 100 according to the embodiment, the imaging detection unit 13, the head detection unit 14, the occupant physique determination unit 15, and the occupant posture determination unit 16 do not start operations until the occupant presence/absence determination unit 12 determines that there is an occupant. Therefore, it is possible to reduce processing load of ECU 100.

### [Other Modifications]

In the above-described embodiment, the occupant physique determination unit 15 and the occupant posture determination unit 16 determine the physique and posture of the occupant based on the map, but the disclosure is not limited thereto. The determination of the physique and posture of the occupant may be performed by other statistical methods such as regression analysis. In addition, when determining the occupant information, it is also possible to set the weight value of each of the load value by the load sensor and the captured image by the imaging device. However, as described above, since utilizing information on both the load value and the captured image brings about a dramatic improvement in the accuracy of determination, the determination may be performed after the respective information are added in a well-balanced manner.

In the above-described embodiment, the occupant physique determination unit 15 and the occupant posture determination unit 16 determine the physique and posture of the occupant individually, but the disclosure is not limited thereto. The physique and posture of the occupant may be determined collectively.

In the above-described embodiment, the detection of the presence or absence of the occupant is performed based on the detection value of the load sensor 31, but the disclosure is not limited thereto. For the detection of the presence or absence of the occupant, a seating sensor may be used instead of or in addition to the load sensor 31.

In the above-described embodiment, whether the occupant is an adult male, an adult female, or a child is determined from the physique of the occupant, but the disclosure is not limited thereto. The type of the occupant that may be determined may be defined in various ways.

In the above-described embodiment, the position and the size of the head of the occupant are determined, but the disclosure is not limited thereto. Instead of the position and size of the head of the occupant, the position and size of the face of the occupant may be used to determine the physique and posture of the occupant. However, as described above, by using the position and size of the head of the occupant for the determination of the physique and posture of the occupant, for example, even if the face of the occupant is hidden by hair or a hat, it is possible to continue the determination. In addition, for example, the area of the upper body of the occupant may be used to determine the physique and posture of the occupant, instead of or in addition to the position and size of the head of the occupant.

In the above-described embodiment, the seats 2a to 2e are provided in the vehicle room, but, for example, the number, arrangement, and shape of seats are not limited to the above-described example. For example, the vehicle may be a three-row seat car instead of the two-row seat car described above. Rear seats may not be of a bench seat type but may be of a type having independent seating surfaces.

In addition, the vehicle 1 may be, for example, an automobile having an internal combustion engine as a drive source, an electric automobile or a fuel cell automobile having an electric motor as a drive source, or a hybrid vehicle having the two as a drive source.

As mentioned above, although the embodiment disclosed here has been illustrated, the above embodiment and modifications are merely given by way of example and are not intended to limit the scope of the disclosure. The above embodiment and modifications may be implemented in various other forms, and various omissions, substitutions, combinations, and changes may be made without departing from the gist of the disclosure. In addition, the configuration or shape of each embodiment or each modification may be partially replaced and implemented.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

## Claims

1. An occupant information determination apparatus (100) comprising:
a head detection unit (14) configured to detect a head of an occupant from a captured image of a vehicle room that is captured by an imaging device (32);
a sensor value detection unit (11) configured to detect a detection value of a sensor provided on a seat (2) in the vehicle room; and
an occupant physique determination unit (15) configured to determine a physique of the occupant from a position of the head of the occupant and a size of the head of the occupant detected by the head detection unit and the detection value detected by the sensor value detection unit.

2. The apparatus according to claim 1, wherein
the sensor is a load sensor (31), and
the sensor value detection unit detects a load value applied to the seat from the detection value of the load sensor.

3. The apparatus according to claim 1 or 2, wherein
the occupant physique determination unit determines the physique of the occupant by statistically analyzing the position of the head of the occupant, the size of the head of the occupant, and the detection value.

4. The apparatus according to any one of claims 1 to 3, further comprising:
a storage unit (23) configured to store a map representing a relationship between the position of the head of the occupant, the size of the head of the occupant, and the detection value and the physique of the occupant,
wherein the occupant physique determination unit determines the physique of the occupant based on the map.

5. The apparatus according to any one of claims 1 to 4, wherein
the occupant physique determination unit determines the physique of the occupant from the detection value when imaging of the vehicle room by the imaging device is not possible.

6. The apparatus according to any one of claims 1 to 5, further comprising:
an occupant presence/absence determination unit (12) configured to determine whether or not the occupant is in the vehicle room from the detection value detected by the sensor value detection unit,
wherein the head detection unit and the occupant physique determination unit are operated when the occupant presence/absence determination unit determines that the occupant is in the vehicle room.

7. The apparatus according to any one of claims 1 to 6, further comprising:
an occupant posture determination unit (16) configured to determine a posture of the occupant from the position of the head of the occupant and the size of the head of the occupant detected by the head detection unit and the detection value detected by the sensor value detection unit.
